Europäisches Patentamt

European Patent Office

Office européen des brevets

(11) Veröffentlichungsnummer: **0 077 086**
**A2**

# (12) EUROPÄISCHE PATENTANMELDUNG

(21) Anmeldenummer: 82201055.9

(22) Anmeldetag: 24.08.82

(51) Int. Cl.³: **B 01 D 29/38**, B 01 D 29/32

(30) Priorität: 02.09.81 CH 5637/81

(43) Veröffentlichungstag der Anmeldung: 20.04.83
Patentblatt 83/16

(84) Benannte Vertragsstaaten: **DE FR GB**

(71) Anmelder: DrM, Dr. Müller AG, Alte Landstrasse 421,
CH-8708 Männedorf ZH (CH)

(72) Erfinder: Müller, Hans, Dr. Ing., Im Allmendli,
CH-8703 Erlenbach (CH)

(74) Vertreter: Herrmann, Peter, Bauernhalde 9,
CH-8708 Männedorf ZH (CH)

(54) Verfahren zur Reinigung von Filterelementen.

(57) In einem Verfahren zur Reinigung von Filterelementen wird eine Abschleuderung eines Filterkuchens durch wechselweise Anwendung von Druck und Vakuum nach beendeter Filtration bewirkt. Die Reinigung ist gegenüber Vibration, die lediglich durch Druckschwankungen erfolgt, verstärkt, da die Ausdehnung der Filtergewebe auf diese Weise vergrössert werden kann.

EP 0 077 086 A2

## Verfahren zur Reinigung von Filterelementen

Die Erfindung betrifft ein Verfahren zur Reinigung von Filterelementen eines Kerzenanschwemmfilters durch Abwerfen des Filterkuchens nach beendeter Filtration.

Bei der Filtration von Flüssigkeiten, die von den darin enthaltenen Feststoffen abgetrennt werden sollen, muss am Ende eines Filtrationszyklus der auf den Filterelementen aufgebaute Filterkuchen entfernt werden.

Die Entfernung eines Filterkuchens durch Vibration ist bekannt. Bei solchen Filtern sind an den Filterelementen Vibratoren angebracht, die nach beendeter Filtration in Betrieb gesetzt werden. Der Filterkuchen fällt dann in den unteren Teil eines Filterbehälters, aus dem er entfernt werden kann.

Diese Anordnung hat den Nachteil, dass die Filterelemente durch die Vibration das Filterelement als solches und die Filtergewebe so stark beansprucht werden, dass sie defekt werden.

Nach der DE-PS 1 007 294 wurde schon vorgeschlagen, eine pulsierende Bewegung mittels Druckstössen zu erzeugen. Um

0077086

dies zu erreichen, sind kerzenförmige Filterkörper in Richtung ihrer Längsachse elastisch ausgebildet, so dass in dieser Richtung beim Rückspülen unter Einwirkung rasch wechselnden Druckes eine atmende Bewegung ausgeführt wird, um ein gründlicheres Abwerfen des Filterkuchens von den Geweben zu erreichen. Zur Erreichung dieses Zieles werden neben der Verwendung eines Faltenbalges zusätzliche elastische Einbauten innerhalb der Filterelemente in Form von federnden Drahtwendeln benötigt, die sich der Länge nach ausdehnen können. Es wird zusätzlich eine Zugfeder als Spannvorrichtung für notwendig gefunden. Alle diese mechanisch bewegten Teile sind einem erhöhten Verschleiss unterworfen. Die bekannte Vibrationsbewegung weist zu geringe Amplituden der Filtergewebe auf, wodurch ein vollständiges Abreinigen nicht in jedem Fall möglich ist oder zu lange dauert.

Aufgabe der Erfindung ist es, ein Verfahren zu schaffen, das die Nachteile der bekannten Reinigungsverfahren von Filterelementen wesentlich verbessert und eine gründlichere und raschere Abreinigung ermöglicht.

Diese Aufgabe wird erfindungsgemäss nach Anspruch 1 gelöst und ist dadurch gekennzeichnet, dass die abwechslungsweise Anwendung von Druck und Unterdruck auf die Klarlaufleitung erfolgt.

Das Verfahren soll beispielhaft an einer Zeichnung erläutert werden.

0077086

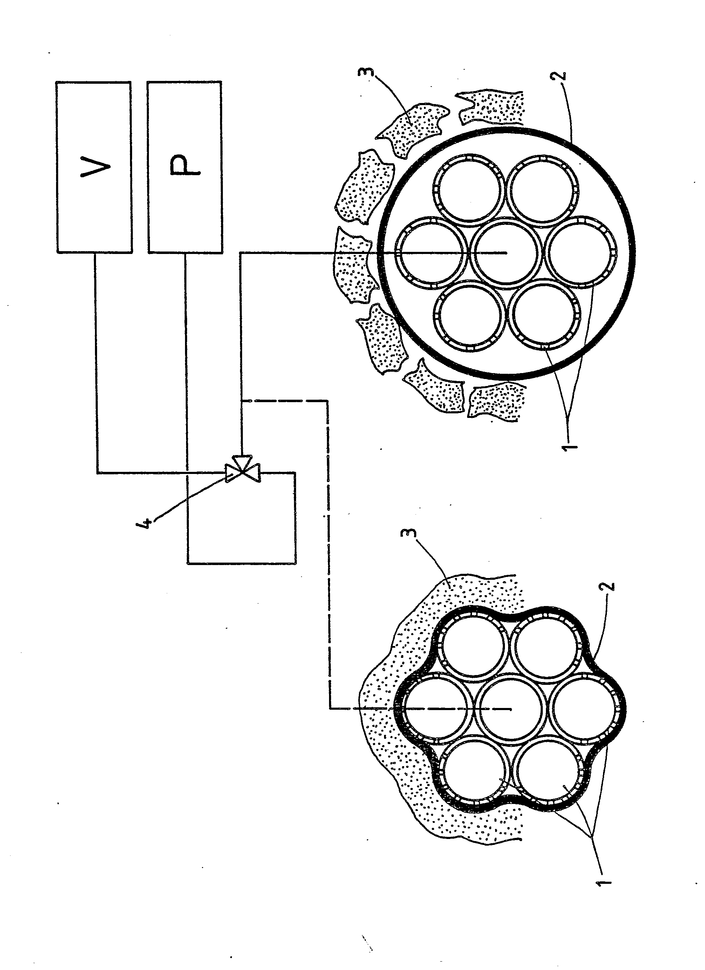

In der einzigen Figur stellt die linke Seite der Zeichnung einen Querschnitt durch ein Bündel von perforierten Rohren 1, die als dichteste Packung um ein Zentralrohr angeordnet ist, im Zustand der Filtration dar, die als Stützelemente für eine Filterkerze dienen. Diese Rohre 1 bestehen in der Regel aus elastischem, chemikalienbeständigem Kunststoff, der in weiten Bereichen temperaturbeständig sein soll. Der rechte Teil der Figur zeigt den gleichen Querschnitt während der Reinigungsphase. Das Rohrbündel 1 ist mit einem Filtergewebe direkt überzogen, welches sich während der Filtration von aussen nach innen wellenförmig an die Oberfläche der Rohre 1 anschmiegt und während der Reinigung in Richtung von innen nach aussen strafft. Der Filterkuchen 3 liegt links noch dem Filtergewebe 2 auf und ist rechts abgesprengt. Ein Dreiweghahn 4 führt über entsprechende Leitungen zu einer Druckquelle P und einer Vakuumquelle V.

Zur Abschleuderung des Filterkuchens wird abwechslungsweise Druck und Vakuum durch Drehung des Dreiweghahns 4 in den Innenraum des Filterelementes aufgegeben. Die Erzeugung des Druckes kann mittels Gas oder einer Flüssigkeit erfolgen. Der Unterdruck wird vorzugsweise durch Ueberdruck im Trübraum erzeugt. Dadurch wird eine maximale Ausdehnung des Filtergewebes erzielt, wodurch der Filterkuchen vollständig entfernt wird. Durch Erhöhung der Frequenz bis fast zur Vibration kann der Reinigungseffekt im Bedarfsfalle verstärkt werden.

0077086

Patentansprüche

1. Verfahren zur Reinigung von Filterelementen durch Abwerfen des Filterkuchens von den Filtergeweben eines Kerzenanschwemmfilters, dadurch gekennzeichnet, dass die Entfernung des Filterkuchens durch abwechslungsweise Anwendung von Druck und Unterdruck auf die Klarlaufleitung erfolgt.

2. Verfahren nach Anspruch 1, dadurch gekennzeichnet, dass die abwechslungsweise Anwendung von Druck und Vakuum bei Frequenzen bis zur Vibration erfolgt.

3. Verfahren nach Anspruch 1, dadurch gekennzeichnet, dass der Unterdruck durch Vakuum erzeugt wird.

4. Verfahren nach Anspruch 1, dadurch gekennzeichnet, dass der Unterdruck durch einen Ueberdruck im Trübraum erzeugt wird.

5. Verfahren nach Anspruch 1, dadurch gekennzeichnet, dass der Druck durch einen Ueberdruck im Klarlauf erzeugt wird.

6. Verfahren nach Anspruch 1, dadurch gekennzeichnet, dass Druck und Vakuum über ein Dreiwegventil gesteuert werden.

V

P

4

3

1

2

3

1

2

1/1

0077086